(19) **Europäisches Patentamt / European Patent Office / Office européen des brevets**

(11) **EP 2 794 248 B1**

(12) **FASCICULE DE BREVET EUROPEEN**

(45) Date de publication et mention
de la délivrance du brevet:
**13.04.2016 Bulletin 2016/15**

(21) Numéro de dépôt: **12806472.2**

(22) Date de dépôt: **20.12.2012**

(51) Int Cl.:
***B29D 30/06*** *(2006.01)*

(86) Numéro de dépôt international:
**PCT/EP2012/076362**

(87) Numéro de publication internationale:
**WO 2013/092846 (27.06.2013 Gazette 2013/26)**

(54) **ELEMENT MOULANT COMPORTANT DES MOYENS DE DECOUPE POUR LE MOULAGE ET LA VULCANISATION D'UNE BANDE DE ROULEMENT D'UN PNEUMATIQUE**

FORMTEIL MIT SCHNEIDVORRICHTUNG ZUM FORMEN UND VULKANISIEREN EINER REIFENLAUFFLÄCHE

MOULDING ELEMENT COMPRISING CUTTING MEANS FOR MOULDING AND VULCANIZING A TYRE TREAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2011 FR 1162258**

(43) Date de publication de la demande:
**29.10.2014 Bulletin 2014/44**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeurs:
• **PERRIN, Frédéric**
**F-63040 Clermont-Ferrand Cedex 9 (FR)**
• **KANEKO, Shuichi**
**Tokyo 102-8176 (JP)**

(74) Mandataire: **Demaure, Pierre-Yves**
**Manufacture Française**
**des Pneumatiques Michelin**
**23, place des Carmes - Déchaux**
**DGD/PI - F35 - Ladoux**
**63040 Clermont-Ferrand Cedex 9 (FR)**

(56) Documents cités:
**EP-A1- 0 911 187        WO-A1-03/089257**
**WO-A1-2006/069912    GB-A- 1 124 915**
**US-A- 6 044 882**

**Description**

DOMAINE DE L'INVENTION

La présente invention concerne le domaine des moules pour le moulage et la vulcanisation d'une bande de roulement d'un pneumatique. Plus particulièrement, l'invention concerne les moules aptes à mouler dans la bande de roulement des blocs de gomme recouverts partiellement par une couche d'un matériau de recouvrement.

ETAT DE LA TECHNIQUE

Il est connu de concevoir des pneumatiques dont la bande de roulement comprend différents mélanges de caoutchouc. Le document WO 03089257 divulgue de telles bandes de roulement. Plus particulièrement le document WO 03089257 divulgue une bande de roulement comportant des blocs de gomme dont les parois sont recouvertes par une couche de matériau de recouvrement. Le matériau constituant cette couche de recouvrement est différent du mélange de caoutchouc constituant la bande de roulement. Ce matériau présente notamment une adhérence sur sol mouillé bien supérieure à l'adhérence sur sol mouillé du mélange de caoutchouc. Ceci permet d'améliorer très sensiblement les performances en régime de virage sur sol mouillé.

Un mode de fabrication de cette bande de roulement est notamment divulgué dans le document WO 2006069912. Selon ce mode de fabrication, dans une première étape, il est prévu d'injecter sous forme d'un ou plusieurs inserts le matériau destiné à constituer une couche de matériau de recouvrement dans l'ébauche crue à l'aide d'une buse d'injection. Le ou les inserts sont ensuite mis en forme, dans une seconde étape, par des cordons d'un moule de vulcanisation pour recouvrir tout ou partie des parois des rainures moulées par ces cordons.

Ce mode de fabrication connaît quelques limites, en particulier pour obtenir des moulages de précision. En effet au cours de sa mise en forme, l'insert subi un effort de cisaillement important de la part du cordon en vue de transformer cet insert en une couche d'épaisseur réduite. Cet effort de cisaillement peut générer des fissures au sein de l'insert ce qui rend plus difficile la maîtrise des mouvements du matériau composant cet insert. La forme et l'épaisseur de la couche de matériau de recouvrement ainsi formée peuvent alors être aléatoires. Les avantages apportés par la couche supplémentaire sur le fonctionnement du pneumatique sont alors réduits.

De plus dans ce mode de fabrication, il est nécessaire de faire correspondre les inserts avec les cordons. Ceci rend alors plus complexe la fabrication de la bande de roulement.

Le document EP 911187 - A révèle un élément moulant d'un moule pour pneumatique comportant essentiellement une surface de moulage destinée à mouler une partie de la surface de roulement, et des lames pour créer des découpages dans les blocks de la bande de roulement.

D'autres modes de fabrication de pneumatiques ayant des revêtements de paroi de rainure sont connus des documents GB 1124915 - A et US 6044882 - A, dans lesquels la bande de roulement crue est recouverte d'une couche de composition différente et ce matériau est poussé dans les rainure par les projections du moule de vulcanisation.

Le document FR11/61796 divulgue un procédé de fabrication d'un pneumatique qui consiste à découper une couche de matériau de recouvrement préalablement déposée sur une ébauche crue d'un pneumatique et à placer une partie de cette couche de recouvrement dans une découpure moulée par une lame d'un élément moulant. Dans ce procédé, la couche de matériau de recouvrement est découpée et placée dans la profondeur de l'ébauche crue au cours d'un même mouvement de l'élément moulant par rapport à l'ébauche crue.

Pour améliorer l'adhérence sur un sol enneigé d'un pneumatique pour roulages hivernaux, dit pneumatique neige, il est connu d'utiliser dans la bande de roulement un matériau caoutchouteux présentant un faible module élastique. La rigidité globale des blocs constituant cette bande de roulement est alors diminuée ce qui peut diminuer également leur résistance à l'usure.

Afin d'améliorer la rigidité des blocs tout en conservant une bonne adhérence sur un sol enneigé, il est connu de former une bande de roulement avec des blocs inclinés faisant un angle supérieur à 0° avec une direction axiale du pneumatique. De cette manière, chaque bloc offre une poutre apparente plus importante vis-à-vis des sollicitations exercées sur ce bloc.

Toujours pour améliorer la rigidité des blocs, il est connu de pourvoir les faces latérales des blocs avec une couche d'un matériau de recouvrement présentant un module élastique supérieur au module élastique du matériau caoutchouteux.

Cependant, la fabrication d'un pneumatique neige comportant de tels blocs inclinés avec le procédé de fabrication du document FR11/61796 pose un certain nombre de problèmes. Il a été notamment constaté une mauvaise adéquation entre la forme des découpes de la couche de recouvrement et la forme des parois latérales des blocs inclinés destinés à recevoir cette couche de recouvrement, ce qui peut poser des problèmes le comportement du pneumatique.

Il existe donc un besoin pour améliorer, la mise en place d'une couche d'un matériau de recouvrement sur des parois de blocs inclinés d'une bande de roulement d'un pneumatique.

DEFINITIONS

Par « pneumatique », on entend tous les types de bandages élastiques soumis à une pression interne ou non.

Par « pneumatique neige » (« snow tyre » ou « winter tyre » en anglais), on entend un pneumatique repéré par une inscription M+S ou M.S. ou encore M&S, marquée sur au moins un des flancs du pneumatique. Ce pneumatique neige se caractérise par un dessin de la bande de roulement et une composition caoutchoutique destinés avant tout à assurer, dans la boue et la neige fraîche ou fondante, un comportement meilleur que celui d'un pneumatique du type routier (en anglais appelé « road type tyre ») conçu pour rouler sur des sols non enneigés.

Par « ébauche crue » d'un pneumatique, on entend une superposition d'une pluralité de produits semi-finis caoutchouteux présents sous forme de bandelettes ou de feuilles, renforcées ou non. L'ébauche crue est destinée à être vulcanisée dans un moule pour obtenir le pneumatique.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement », on entend la surface formée par les points de la bande de roulement du pneumatique qui entrent en contact avec la chaussée lorsque le pneumatique roule.

Par « moule », on entend un ensemble d'éléments moulants séparés qui, par rapprochement relatif, permettent de délimiter un espace de moulage toroïdal.

Par « élément moulant » d'un moule, on entend une partie d'un moule. Un élément moulant est par exemple un segment de moule.

Par « surface de moulage » d'un élément moulant, on entend la surface du moule destinée à mouler la surface de la bande de roulement du pneumatique.

Par « lame » d'un élément moulant, on entend une protubérance faisant saillie à partir de la surface de moulage. Parmi les lames, on distingue des lamelles comportant une largeur inférieure à 2 mm et des cordons comportant une largeur supérieure ou égale à 2 mm. Les lamelles sont destinées à mouler des incisions dans la bande de roulement du pneumatique, c'est-à-dire des découpures qui se ferment au moins en partie dans l'aire de contact du pneumatique avec le sol. Les cordons sont destinés à mouler des rainures dans la bande de roulement, c'est-à-dire des découpures qui ne se ferment pas dans l'aire de contact du pneumatique avec le sol. Les lames comportent une extrémité arrondie.

Par moyens de découpe, on entend une protubérance faisant saillie à partir de la surface de moulage. Cette protubérance est apte à découper la couche d'un matériau de recouvrement recouvrant l'ébauche crue.

Par « hauteur de la lame, respectivement des moyens de découpe », on entend la distance entre la surface de moulage du moule et l'extrémité de la lame, respectivement des moyens de découpe.

Par « module d'élasticité » d'un matériau élastique, on entend le rapport entre la variation de contrainte et la variation de déformation lorsque ce matériau est soumis à des efforts de traction ou de compression.

RESUME DE L'INVENTION

L'invention concerne un élément moulant d'un moule pour le moulage et la vulcanisation d'une bande de roulement d'un pneumatique Comme défini dans la revendication 1. Cet élément moulant comporte une surface de moulage destinée à mouler une partie de la surface de roulement du pneumatique et une lame complexe de hauteur H faisant saillie à partir de la surface de moulage. La lame complexe comprend un corps orienté principalement selon une direction circonférentielle X et au moins une branche secondaire de forme en U tournée vers ce corps. La branche secondaire est orientée principalement selon une direction oblique J, cette direction oblique faisant un angle $\psi$ non nul avec une direction transversale Y perpendiculaire à la direction circonférentielle X. La branche secondaire est en contact avec le corps au niveau de deux zones de contact pour délimiter une cavité de longueur L. L'élément moulant comporte un moyen de découpe principal de hauteur Hp faisant saillie à partir de la surface de moulage dans la cavité. Ce moyen de découpe principal s'étend entre deux de ses extrémités parallèlement à la direction oblique J, la longueur de ce moyen de découpe principal étant inférieure à la longueur L de la cavité. L'élément moulant comporte deux moyens de découpe secondaires de hauteur Hs s'étendant à partir d'une des extrémités du moyen de découpe principal jusqu'à respectivement une des zones de contact faisant face à cette extrémité, chaque moyen de découpe secondaire formant un angle $\theta$ avec ce corps principal. La hauteur Hp du moyen de découpe principal et la hauteur Hs des moyens de découpe secondaires sont supérieures à la hauteur H de la lame complexe.

Les moyens de découpe secondaires permettent d'adapter les dimensions des parties découpées de la couche de recouvrement à l'inclinaison du bloc par rapport à la direction transversale Y. On améliore ainsi la mise en place du matériau constituant la couche de recouvrement sur les parois latérales de ce bloc.

Les moyens de découpe secondaires permettent également de découper une partie de la couche de recouvrement selon une forme globalement triangulaire. Cette partie découpée de la couche de recouvrement va recouvrir une paroi latérale du bloc moulée par la lame complexe. Dit autrement, cette paroi latérale de bloc délimite partiellement une rainure dans le pneumatique. En choisissant un matériau de recouvrement approprié, on peut, par exemple, faciliter l'écoulement de l'eau dans cette rainure en vue d'améliorer l'adhérence du pneumatique sur un sol mouillé. On peut également améliorer l'adhérence sur un sol enneigé en transversal après usure, ou bien améliorer la rigidité en transversal de ce bloc. Des formes préférentielles de l'invention sont définies dans les revendications dépendantes.

Dans un mode de réalisation préférentiel, l'angle θ est identique à l'angle ψ.

Dans une variante de réalisation, le moyen de découpe principal est disposé dans la cavité de sorte que les moyens de découpe secondaires forment respectivement avec le corps principal de la lame complexe des angles différents.

BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

- la **figure 1** représente schématiquement un élément moulant conforme à l'invention ;

- la **figure 2** est une vue en perspective d'un bloc moulé par l'élément moulant de la **figure 1 ;**

- La **figure 3** représente schématiquement une partie d'un élément moulant selon un second mode de réalisation ;

- la **figure 4** représente une vue en coupe partielle de l'élément moulant de la **figure 3** selon une ligne A-A de découpe.

Dans la description qui va suivre, des éléments sensiblement identiques ou similaires seront désignés par des références identiques.

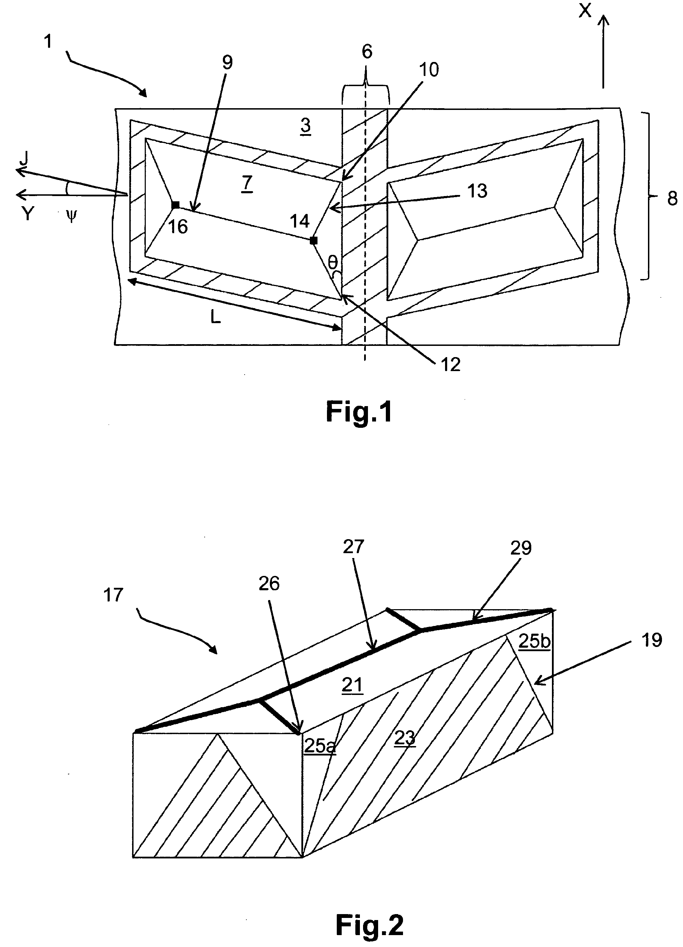

La **figure 1** représente schématiquement un élément moulant 1 conforme à l'invention.

Cet élément moulant 1 comporte une surface de moulage 3 destinée à mouler une partie d'une surface de roulement d'un pneumatique. L'élément moulant 1 comporte également une lame complexe 6, 8 de hauteur H faisant saillie à partir de la surface de moulage 3. Cette lame complexe comprend un corps 6 orienté principalement selon une direction circonférentielle X. La direction circonférentielle correspond sur le pneumatique à une direction qui est tangente à tout cercle centré sur l'axe de rotation de ce pneumatique. La lame complexe comprend également ici deux branches secondaires 8 de forme en U disposées de part et d'autre du corps 6 et tournées vers ce corps. Chaque branche secondaire est orientée principalement selon une direction oblique J, cette direction oblique faisant un angle ψ non nul avec une direction transversale Y perpendiculaire à la direction circonférentielle X. Chaque branche secondaire 8 est en contact avec le corps 6 au niveau de deux zones de contact 10, 12 de sorte que les branches 8 délimitent des cavités fermées.

L'élément moulant 1 comprend également un moyen de découpe principal 9. Ce moyen de découpe principal fait saillie à partir de la surface de moulage 3 et sa hauteur Hp est supérieure à la hauteur H de la lame complexe 6, 8. Ce moyen de découpe principal 9 s'étend dans la cavité 7 parallèlement à la direction oblique J. En outre, l'élément moulant 1 comporte deux moyens de découpe secondaires 13 de hauteur Hs supérieure à la hauteur H de la lame complexe 6, 8. Ces moyens de découpe secondaires s'étendent du moyen de découpe principal 9 jusqu'au corps 6. Plus particulièrement, les moyens de découpe secondaires 13 forment avec le corps 6 un angle θ inférieur ou égal à 45°.

On notera que le moyen de découpe principal et les moyens de découpe secondaires sont destinés à découper une couche d'un matériau de recouvrement préalablement déposée sur une ébauche crue. De tels moyens de découpe sont notamment divulgués dans le document FR11/61760 ou le document FR11/61762.

La **figure 2** est une vue en perspective d'un bloc moulé par l'élément moulant 1 de la **figure 1.**

Ce bloc 17 présente une hauteur H et une longueur L. Plus particulièrement, le bloc 17 comprend des faces latérales 19 et une face de contact 21 reliant ces faces latérales 19. Chaque face latérale 19 est recouverte par une couche 23 d'un matériau de recouvrement sur au moins 50% de la surface de la face. Le matériau de recouvrement présente des bonnes caractéristiques de rigidité, c'est-à-dire une bonne capacité à résister à une déformation élastique sous des efforts de compression et/ou de cisaillement.

Plus particulièrement, le matériau de recouvrement présente un module élastique supérieur au module élastique du matériau caoutchouteux composant le bloc 3. Un tel matériau de recouvrement est par exemple un matériau élastomère dont le module dynamique de cisaillement G* soumis à une contrainte maximale alternée de 0,7 MPa, à une fréquence de 10 Hz et à une température de -10°C est supérieur à 200 MPa et de préférence supérieur 300 MPa. Dans le présent document, les termes « module élastique G' » et « module visqueux G" » désignent des propriétés dynamiques bien connues de l'homme du métier. Ces propriétés sont mesurées sur un viscoanalyseur de type Metravib VA4000 sur des éprouvettes moulées à partir de compositions crues. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre de l'éprouvette est de 10 mm (elle a donc une section circulaire de 78.5 mm$^2$), l'épaisseur de chacune des portions de composition caoutchouteuse est de 2 mm, ce qui donne un ratio « diamètre sur épaisseur » de 5 (contrairement à la norme ISO 2856, mentionnée dans la norme ASTM, paragraphe X2.4, qui préconise une valeur d/L de 2). On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0.7 MPa), symétriquement autour de sa position d'équilibre. La mesure est réalisée au cours d'une rampe de température croissante de 1,5°C par minute, depuis une température Tmin inférieure à la température de transition vitreuse (Tg) du matériau, jusqu'à une température Tmax qui peut correspondre au plateau caoutchoutique du matériau. Avant de commencer le balayage, on stabilise l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies (en l'occurrence, 0°, 5° et 20°C). Le « module complexe » G* se définit comme la valeur absolue de la somme complexe des modules élastique G' et visqueux G" :

$$ G^* = \sqrt{(G'^2 + G''^2)} \, . $$

Dans une variante de réalisation, le matériau élastomère de la couche de recouvrement comprend une composition à base d'au moins un élastomère diénique très fortement chargé en souffre, tel que de l'ébonite.

Dans une autre variante de réalisation, la couche de recouvrement comprend un assemblage de fibres, par exemple un assemblage tridimensionnel de fibres formant un feutre. Les fibres de ce feutre peuvent être choisies dans le groupe des fibres textiles, des fibres minérales et de leur mélange. On notera également que les fibres de ce feutre peuvent être choisies parmi des fibres textiles d'origine naturelle, par exemple, dans le groupe des fibres de soie, de coton, de bambou, de cellulose, de laine et de leurs mélanges.

Dans une autre variante de réalisation, le matériau élastomère de la couche de recouvrement comprend une composition à base d'au moins un polymère thermoplastique, tel que du polyéthylène téréphtalate (PET). Un tel polymère peut présenter un module de Young supérieur à 1 GPa.

Sur la **figure 2,** la face de contact 21 du bloc comporte une zone d'attaque destinée à entrer en contact en première avec le sol au cours du roulage du pneumatique. Comme le bloc est ici incliné par rapport à une direction circonférentielle du pneumatique, cette zone d'attaque forme un coin d'attaque 26. Chaque face latérale 23 du bloc comporte deux zones non recouvertes 25a, 25b par le matériau de recouvrement. Les zones non recouvertes ont ici une forme globalement triangulaire.

Le bloc 1 comprend également une incision principale 27 et des incisions secondaires 29. L'incision principale 27 est moulée par le moyen de découpe principal 9 et les incisions secondaires 29 sont moulées par les moyens de découpe secondaires 13.

Comme il a déjà été précisé, c'est l'agencement et la forme des moyens de découpe principaux et secondaires qui conditionnent la forme des zones recouvertes par le matériau de recouvrement sur les faces latérales.

On notera que lorsque l'angle θ est identique à l'angle ψ, tel que représenté sur la **figure 1,** les inventeurs ont observés que la mise en place de la couche du matériau de recouvrement sur les faces latérales du bloc était facilitée.

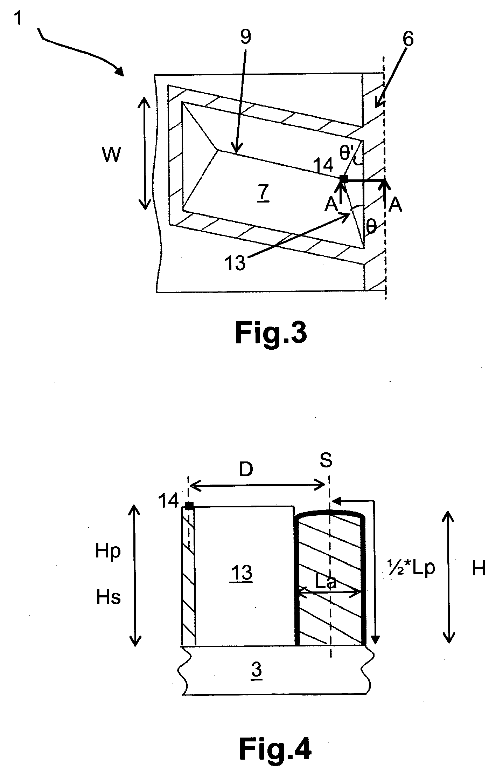

La **figure 3** présente une variante de réalisation de l'élément moulant 1 dans laquelle le moyen de découpe principal 9 est disposé dans la cavité 7 de sorte que les moyens secondaires 13 forment respectivement avec le corps 6 des angles θ, α différents. Plus particulièrement, le moyen de découpe principal 9 n'est pas, ici, centré par rapport à la largeur W de la cavité 7 comme dans l'exemple de la **figure 1.**

La **figure 4,** représente une vue en coupe partielle de l'élément moulant 1 selon la ligne A-A de la **figure 3.**

Dans cette vue en coupe, le corps 6 de la lame complexe a un profil de longueur Lp et une largeur La. Ce profil présente une symétrie selon un axe de symétrie S perpendiculaire à la surface de moulage 3. L'angle α et l'angle θ de la **figure 3** ont des valeurs telles que :

$$ \tan(\theta) \leq \frac{\cos(\psi)}{\left(\dfrac{W}{(Lp - La)} - \sin(\psi)\right)} $$

et

$$ \tan(\alpha) \leq \frac{\cos(\psi)}{\left(\dfrac{W}{(Lp - La)} + \sin(\psi)\right)} $$

L'invention n'est pas limitée aux exemples décrits et représentés et diverses modifications peuvent y être apportées sans sortir de son cadre.

## Revendications

1. Elément moulant d'un moule pour le moulage et la vulcanisation d'une bande de roulement d'un pneumatique, cet élément moulant (1) comportant une surface de moulage (3) destinée à mouler une partie de la surface de roulement du pneumatique et une lame complexe (6, 8) de hauteur H faisant saillie à partir de la surface de moulage (3), cette lame complexe comprenant un corps (6) orienté principalement selon une direction circonférentielle X et au moins une branche secondaire (8) de forme en U tournée vers ce corps (6), cette branche secondaire (8) étant orientée principalement selon une direction oblique J, cette direction oblique faisant un angle ψ non nul avec une direction transversale Y perpendiculaire à la direction circonférentielle X, la branche secondaire (8) étant en contact avec le corps (6) au niveau de deux zones de contact (10, 12) pour délimiter une cavité (7) de longueur L **caractérisé en ce que** l'élément moulant comporte un moyen de découpe principal (9) de hauteur Hp faisant saillie à partir de la surface de moulage (3) dans la cavité (7), ce moyen de découpe principal s'étendant entre deux extrémités (14, 16) parallèlement à la direction oblique J, la longueur de ce moyen de découpe principal (9), mesurée entre ses deux extrémités (14, 16), étant inférieure à la longueur L de la cavité (7) et **en ce que** l'élément moulant (1) comporte au moins deux moyens de découpe secondaires (13) de hauteur Hs s'étendant à partir d'une des extrémités (14) du moyen de découpe principal jusqu'à respectivement une des zones de contact (10, 12) faisant face à cette extrémité (14), chaque moyen de découpe secondaire (13) formant un angle θ avec ce corps (6), et **en ce que** la hauteur Hp du moyen de découpe principal (9) et la hauteur Hs des moyens de découpe secondaires (13) sont supérieures à la hauteur H de la lame complexe (6, 8).

2. Elément moulant selon la revendication 1, **caractérisé en ce que** l'angle θ est identique à l'angle ψ.

3. Elément moulant selon l'une quelconque des revendications 1 ou 2, **caractérisé en ce que** le moyen de découpe principal (9) est disposé dans la cavité (7) de sorte que les moyens de découpe secondaires (10, 12) forment respectivement avec le corps (6) de la lame complexe des angles (θ, α) différents.


**Patentansprüche**

1. Formgebendes Element eines Formwerkzeugs zum Formen und zur Vulkanisierung eines Laufstreifens eines Luftreifens, wobei dieses formgebende Element (1) eine Formgebungsfläche (3), die dazu bestimmt ist, einen Teil der Lauffläche des Luftreifens zu formen, und eine komplexe Lamelle (6, 8) einer Höhe H aufweist, die ausgehend von der Formgebungsfläche (3) vorsteht, wobei diese komplexe Lamelle einen Körper (6), der hauptsächlich gemäß einer Umfangsrichtung X ausgerichtet ist, und mindestens einen U-förmigen Sekundärschenkel (8) aufweist, der zu diesem Körper (6) weist, wobei dieser Sekundärschenkel (8) hauptsächlich gemäß einer schrägen Richtung J ausgerichtet ist, wobei diese schräge Richtung einen Winkel ψ ungleich Null mit einer Querrichtung Y lotrecht zur Umfangrichtung bildet, wobei der Sekundärschenkel (8) mit dem Körper (6) im Bereich von zwei Kontaktzonen (10, 12) in Kontakt steht, um einen Hohlraum (7) einer Länge L zu begrenzen, **dadurch gekennzeichnet, dass** das formgebende Element eine Hauptschneideeinrichtung (9) einer Höhe Hp aufweist, die ausgehend von der Formgebungsfläche (3) in den Hohlraum (7) vorsteht, wobei diese Hauptschneideeinrichtung sich zwischen zwei Enden (14, 16) parallel zur schrägen Richtung J erstreckt, wobei die Länge dieser Hauptschneideeinrichtung (9), gemessen zwischen ihren zwei Enden (14, 16), kleiner als die Länge L des Hohlraums (7) ist, und dass das formgebende Element (1) mindestens zwei sekundäre Schneideeinrichtungen (13) einer Höhe Hs aufweist, die sich ausgehend von einem der Enden (14) der Hauptschneideeinrichtung bis zu jeweils einem der Kontaktbereiche (10, 12) erstrecken, der diesem Ende (14) gegenüberliegt, wobei jede sekundäre Schneideeinrichtung (13) einen Winkel θ mit diesem Körper (6) bildet, und dass die Höhe Hp der Hauptschneideeinrichtung (9) und die Höhe Hs der sekundären Schneideeinrichtungen (13) größer sind als die Höhe H der komplexen Lamelle (6, 8).

2. Formgebendes Element nach Anspruch 1, **dadurch gekennzeichnet, dass** der Winkel θ gleich dem Winkel ψ ist.

3. Formgebendes Element nach einem der Ansprüche 1 oder 2, **dadurch gekennzeichnet, dass** die Hauptschneideeinrichtung (9) so im Hohlraum (7) angeordnet ist, dass die sekundären Schneideeinrichtungen (10, 12) je mit dem Körper (6) der komplexen Lamelle unterschiedliche Winkel (θ, α) bilden.


**Claims**

1. Moulding element of a mould for moulding and vulcanizing a tyre tread, this moulding element (1) comprising a moulding surface (3) intended to mould part of the tread surface of the tyre and a complex blade (6, 8) of height H projecting from the moulding surface (3), this complex blade comprising a body (6) oriented mainly in a circumferential direction X and at least one U-shaped secondary branch (8) facing towards this body (6), this secondary branch (8) being oriented mainly in an oblique direction J, this oblique direction making a non-zero angle ψ with a transverse direction Y perpendicular to the circumferential direction X, the secondary branch (8) being in contact with the body (6) at two contact zones (10, 12) to delimit a cavity (7) of length L, **characterized in that** the moulding element comprises a main cutting means (9) of height Hp projecting from the moulding surface (3) in the cavity (7), this main cutting means extending between two ends (14, 16) and running parallel to the oblique direction J, the length of this main cutting means (9), measured between its two ends (14, 16), being less than the length L of the cavity (7), and **in that** the moulding element (1) comprises at least two secondary cutting means (13) of height Hs extending from one of the ends (14) of the main cutting means as far as a respective one of the contact zones (10, 12) facing this end (14), each secondary cutting means (13) forming an angle θ with this body (6), and **in that** the height Hp of the main cutting means (9) and the height Hs of the secondary cutting means (13) are greater than the height H of the complex blade (6, 8).

2. Moulding element according to Claim 1, **characterized in that** the angle $\theta$ is identical to the angle $\psi$.

3. Moulding element according to either one of Claims 1 and 2, **characterized in that** the main cutting means (9) is positioned in the cavity (7) in such a way that the secondary cutting means (10, 12) respectively form different angles ($\theta$, $\alpha$) with the body (6) of the complex blade.

**Fig.1**

**Fig.2**

# Fig.3

# Fig.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03089257 A
- WO 2006069912 A
- EP 911187 A
- GB 1124915 A
- US 6044882 A
- FR 1161796
- FR 1161760
- FR 1161762

**Littérature non-brevet citée dans la description**

- *ASTM D 5992 - 96,* Septembre 2006